**Europäisches Patentamt**

(19) **European Patent Office**

**Office européen des brevets**

(11) Publication number: **0 181 974**
**B1**

(12) **EUROPEAN PATENT SPECIFICATION**

(45) Date of publication of patent specification: **25.01.89**

(21) Application number: **84307906.2**

(22) Date of filing: **14.11.84**

(51) Int. Cl.⁴: **F 02 M 31/18, F 02 M 53/02**

(54) **Fuel vaporization device for an internal combustion engine.**

(43) Date of publication of application:
**28.05.86 Bulletin 86/22**

(45) Publication of the grant of the patent:
**25.01.89 Bulletin 89/04**

(84) Designated Contracting States:
**DE FR GB IT SE**

(56) References cited:
**US-A-3 227 427**
**US-A-3 728 092**
**US-A-4 003 356**
**US-A-4 151 821**

**BRENNSTOFF-WÄRME-KRAFT, vol. 32, no. 12, December 1980, page 547, Würzburg, DE; H. RÖGENER: "Einspritzen von Brennstoff im überkritischen Zustand"**

(73) Proprietor: **Gilmor, James**
**14341 E. Carolina Drive**
**Aurora Colorado 80012 (US)**

(72) Inventor: **Gilmor, James**
**14341 E. Carolina Drive**
**Aurora Colorado 80012 (US)**

(74) Representative: **Corin, Christopher John et al**
**Mathisen Macara & Co. The Coach House 6-8**
**Swakeleys Road**
**Ickenham Uxbridge UB10 8BZ (GB)**

Courier Press, Leamington Spa, England.

# EP 0 181 974 B1

**Description**

The present invention relates to a liquid fuel to gaseous fuel converting device for an internal combustion engine, the device comprising a vacuum chamber, a fuel reservoir, means for supplying fuel substantially without air into said vacuum chamber and having an inlet connected to said reservoir, and vacuum pump means coupled to said vacuum chamber.

Such a device may be used for converting liquid fuel to gaseous fuel prior to the introduction into an intake manifold of an internal combustion engine. An example of such a device is described in US—A—3 728 092, in which the petroleum fuel is heated in a sump before it is passed to a spray line in a vapor tank on which a vacuum is drawn. The sprayed fuel strikes a baffle and this causes it to disperse into fine liquid particles and subsequently flash to a vapor in the powerful vacuum of the tank. This reference represents one of many examples of attempts to vaporize liquid fuel. It is well understood that the greater the vaporization of liquid fuel that can be accomplished, the greater the surface area of fuel which is subject to oxidation, and, therefore, the higher the rate of combustion. The present invention is concerned, therefore, with solving the technical problem of providing a device for converting liquid fuel to gaseous fuel which provides for efficient vaporization without requiring any unduly complex structure or posing a threat of explosion.

The liquid fuel to gaseous fuel converting device of the present invention is characterised in that said vacuum chamber is heated, and in that said fuel supplying means is an injector, said vacuum pump means being capable of drawing a substantial vacuum on said chamber such that liquid fuel is substantially completely vaporized on injection, and in that the device comprises a fuel control unit connected to said injector, said injector being responsive to signals from said fuel control unit to adjust the frequency and volume of liquid fuel injected into said vacuum chamber.

Such a device is efficient at vaporizing the fuel since it provides a closed system which is not open to the atmosphere in the path from the injector to the manifold, which allows a sufficient vacuum to be drawn to provide efficient vaporization. Optionally, minute amounts of air may be admitted through a bleed valve into the chamber along with the liquid fuel. This can improve flow of the substantially formed gaseous fuel throughout the system in some installations.

Other advantageous features and constructions of the device of the present invention are defined in the attached claims.

The term "fuel" as used herein is intended to include gasoline, propane, butane, alcohol and any other relatively volatile hydrocarbon used to run an internal combustion engine.

The term "internal combustion engine" is intended to include all reciprocal piston engines, turbine engines and rotary engines, etc.

Embodiments of the invention will now be described, by way of example only, with reference to the accompanying diagrammatic drawings, in which:

Figure 1 is a diagrammatic illustration of a fuel vaporization device constructed in accordance with this invention;

Figure 2 is an enlarged vertical section, showing details of the fuel injector of Figure 1;

Figures 3 to 6 are diagrammatic illustrations of the sequential operation of a rolling piston vacuum pump as utilised in the device shown in Figure 1;

Figure 7 is an enlarged longitudinal vertical section through the vacuum pump of Figure 1, showing further details thereof, including a pressurized oil lubrication system;

Figure 8 is an enlarged perspective view of the electronic fuel control unit shown in Figure 1;

Figure 9 is a circuit diagram of the electronic fuel control unit of Figure 8;

Figure 10 is a diagrammatic illustration of a further embodiment of a fuel vaporization device constructed in accordance with this invention;

Figure 11 is a perspective view of the vacuum pump for Figure 10 broken away to show the details of the gasification chambers;

Figure 12 is a side elevation of the vacuum pump of Figure 11, but on a slightly reduced scale;

Figure 13 is an offset vertical section, taken along line 4—4 of Figure 12, showing further details of the gasification chamber and heat exchanger jacket;

Figure 14 is a fragmentary offset vertical section, taken along line 5—5 of Figure 13, showing details of the exhaust port and heat exchange jacket; and

Figures 15 to 18 are diagrammatic illustrations of the sequence of operations of the pump of Figures 10 to 14.

Liquid fuel is pumped from a fuel tank 10 through a fuel line 12 by a fuel pump 14. The fuel pump may be a conventional electric fuel pump of the type used in the automotive industry. The pump supplies liquid fuel through a fuel line 16 to fuel injector I. Any excess fuel not required by fuel injector I is returned to gas tank 10 through an overflow line 18 from fuel pump 14.

Fuel injector I is energized by power supplied from electronic fuel control unit U through lines 20 and 22 connected to a terminal strip 24 which has six contact points 1—6. Contact points 1—5 are connected in a manner described below. Contact point 6 is not used. Power is supplied to the electronic fuel control unit by means of a battery 26 connected to terminal strip 24 through lines 28 and 30, as shown. The coil 32 associated with the internal combustion engine is also connected to terminal strip 24 as by a line 34. The

2

signal from the coil is indicative of the speed of the engine and therefore provides a control for the frequency of energization of fuel injector I, all in a manner more fully described below.

As best seen in Figure 2, the electric, solenoid-operated injector valve has a conical valve seat 36 connected to a plunger 38 and urged into closed position by spring 40 against valve opening 42. The plunger is made of soft iron and is slidable received in a solenoid core 44 around which a coil 46 is wound. This coil is connected to terminals 48 and 50 to which wires 20 and 22 are respectively connected. When coil 46 is energized, plunger 38 is pulled into the solenoid thereby forming an opening between the slanted surfaces of valve seat 36 and valve opening 42 which releases atomized droplets or pressurized fuel supplied under pressure from fuel pump 14. When coil 46 is de-energized, spring 40 returns the conical valve seat 36 to its closed position against the sloping surface of valve opening 42. The frequency and duration of the solenoid action are variables that can be controlled by adjustment of the controls for the electronic fuel control unit U in response to engine load as explained more fully below.

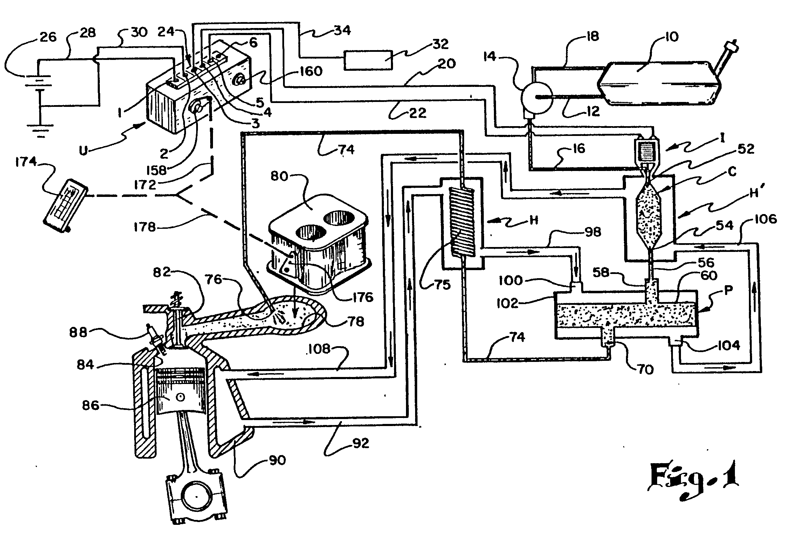

The valve opening or outlet 42 of fuel injector I is connected to an inlet 52 of vacuum chamber C, as shown in Figure 1. The vacuum chamber in turn has an outlet 54 connected by a fuel line 56 to vacuum pump P. The vacuum pump P draws a very high vacuum, such as on the order of 73.3 to 85.3 kN/m² (55 to 64 cm of mercury) an alcohol fuel and 85.3 to 92 kN/m² (64 to 69 cm of mercury) on gasoline fuel at sea level, on vacuum chamber C so that when the fuel droplets are injected by fuel injector I into vacuum chamber C they are rapidly and substantially completely converted from a liquid to a gas. The optimum vacuum to obtain substantially complete vaporization of the fuel has been found to be 81.2 kN/m² (61 cm of mercury) for alcohol and 88 kN/m² (66 cm of mercury) for gasoline. These high vacuums can be drawn because the system is closed, i.e., no air is admitted into the vacuum chamber. The vacuum chamber has no communication with atmospheric air pressure. This permits the use of a vacuum pump of practical size and power requirements not heretofore possible.

Any vacuum pump which can draw the aforementioned vacuum levels will be satisfactory. One pump which has been found to be particularly satisfactory is a rolling piston pump such as Model No. SA439 manufactured by Mitsubishi Electric Corporation of Tokyo, Japan and sold through Mitsubishi Electric Sales America, Inc., 3247 West Story Road, Irving, Texas 75062. Also, a turbine pump can be used.

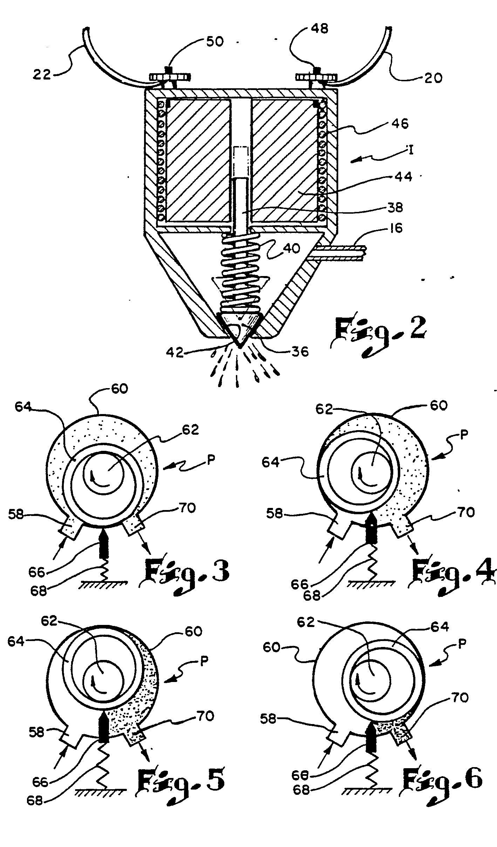

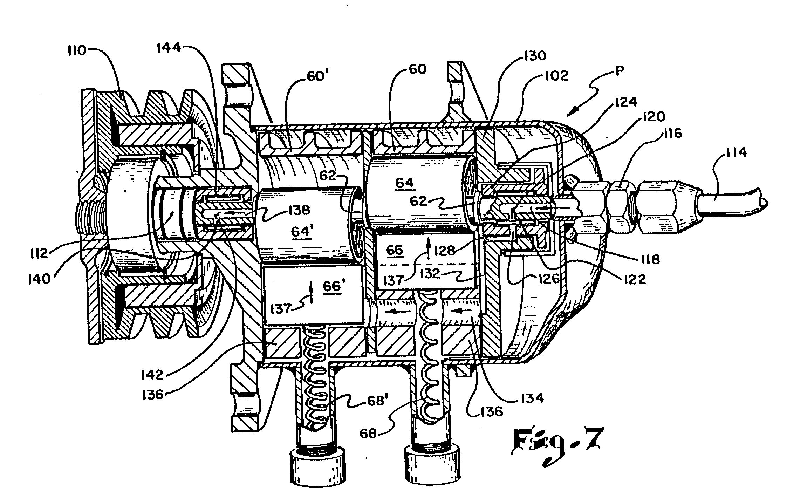

A cross section of the rolling piston pump is shown in Figure 7. The operation of such a pump is diagrammatically shown in Figures 3—6. The gaseous fuel is drawn into pump P through inlet port 58 due to the vacuum or subatmospheric pressure created by the pump. The pump consists of an outer cylinder 60, a central crank shaft 62 to which a rolling piston 64 is fixedly attached for rotation with the crank shaft. The rolling piston together with a vane 66 which is urged against the surface of piston 64 by a spring 68 divides cylinder 60 into two chambers, namely a vacuum chamber into which gaseous fuel is drawn and a compression chamber which compresses the gaseous fuel and discharges it through outlet 70. It will be understood that even in the compression chamber, the pressure will be very low, even below atmospheric pressure. It is only important that it be above the engine manifold pressure to induce flow of the gaseous fuel from the compression chamber to the manifold. Thus, as the rolling piston 64 rolls from the position shown in Figure 3 to the position shown in Figure 4 it will temporarily close inlet 58 and begin compressing the gaseous fuel which is ahead of the piston. When the piston reaches the position of Figure 4, inlet 58 will again be open and fuel will enter into the space between piston 64 and vane 66. As the piston 64 continues to roll from the position shown in Figure 4 to the position shown in Figure 5, the gaseous fuel ahead of the piston will be compressed and additional fuel will be drawn into the pump by the vacuum created behind piston 64. On the other hand, the fuel ahead of piston 64 continues to be compressed and to flow through outlet 70 as the piston rolls from the position shown in Figure 5 to that shown in Figure 6. The fuel pressure will increase because of the restriction of outlet 70 and can vary from subatmospheric pressure to a pressure of about two atmospheres. The gaseous fuel then is drawn to the intake manifold of the engine by the manifold vacuum.

The fuel may be supplied to the engine through fuel line 74, shown in Figure 1, which terminates in a nozzle 76 in intake manifold 78 of the engine. Advantageously, nozzle 76 is located adjacent conventional carburetor 80 which supplies fuel to the engine during warm up and regulates air flow to the manifold as described more fully below. The fuel-air mixture is then supplied through intake valve 82 to cylinder 84 in which piston 86 reciprocates to burn the fuel upon ignition of spark plug 88 as is well known in the art. Although only one cylinder has been shown, it will be understood that the engine may have multiple cylinders.

Conveniently, a heat exchange system is provided for maintaining the gaseous fuel at substantially constant temperature whereby the cooling fluid from the motor block 90 is used as a heat transfer medium. In this regard, a supply tube 92 carries heated cooling fluid from motor block 90 to a first heat exchanger H surrounding a heat exchange portion 75 of fuel line 74, as shown. It will be understood that Figure 1 is a diagrammatic illustration and that heat exchanger H could be made to surround all or substantially all of fuel line 74 as required to maintain the gaseous fuel at a substantially constant temperature. The purpose of the heat exchanger is to maintain the temperature of the gaseous fuel at a relatively high temperature of between 71°C and 94°C. A temperature of about 82°C has been found to be very satisfactory. By raising the temperature of the gaseous fuel, the vapor point of the fuel is lowered thereby minimizing the possibility that the fuel will condense in fuel line 74. The coolant from the engine then goes through tube 98 to an inlet 100 of a heat exchanger 102 forming part of rolling piston pump P and surrounding chamber 60 therein.

The motor coolant then passes through an outlet 104 and through tube 106 to a second heat exchanger H' surrounding vacuum chamber C. Heat exchanger H' is very important in keeping vacuum chamber C heated since the expansion of the liquid fuel from fuel droplets injected by fuel injector I into the vacuum chamber will have a cooling effect as they expand. By maintaining the temperature of the vacuum chamber at a level approximating that of the heated cooling fluid from the motor block 90, the vaporization point of the liquid fuel droplets will be lowered, enhancing vaporization. Furthermore, recondensation of the gaseous fuel, as previously discussed, will be minimized. The cooling fluid then passes from the heat exchanger H' through a return tube 108 and back into motor block 90 where it is again heated by the engine. The temperature of the gaseous fuel should be kept in the range of 71° to 94°C with a temperature of about 82°C being desirable. It will be understood that the various elements of this invention may be located in closer proximity so that one heat exchange jacket is all that will be required or separate ones may be used for the separate elements as space and location of engine parts dictate as will be apparent to one skilled in the art.

While a heat exchange system utilizing liquid engine coolant has been described, it should be understood that other heat exchange media can be used, such as electricity or vehicle exhaust.

Turning now to Figure 7, a cross section of pump P is shown. This pump can be driven through pulley 110 mounted on drive shaft 112, which in turn is connected to crank shaft 62. The pulley will be driven in the conventional manner such as by a v-belt (not shown) extending from pulley 110 to a drive pulley on the internal combustion engine. In order to provide sufficient capacity, pump P is shown as having two rolling pistons 64 and 64' eccentrically mounted on opposite sides of crank shaft 62 and rotatable about the walls of cylinder 60 and 60', respectively. Vanes 66 and 66' are urged against the bottom of pistons 64 and 64' by springs 68 and 68', respectively, to divide the respective cylinders into two chambers as previously described. The two pistons work in parallel in creating the vacuum in vacuum chamber C.

Means are provided for lubricating the piston walls and cylinder walls under pressure which includes an oil pressure line 114 from a source of oil (not shown) which is connected to an oil pressure fitting 116 connected to the end of housing 102 surrounding the operative portions of the pump and serving as a heat exchange, as previously described. The pressure fitting 116 is connected by a passageway 118 in one end of crank shaft 62, as shown. The oil passes through this passageway to a port 120 extending at right angles through the side wall of crank shaft 62. The oil then passes through races 122 in a roller bearing 124 which supports the end of crankshaft 62. After lubricating roller bearing 124, the oil passes through another port 126 in the roller bearing and into a lateral groove 128 in bearing support 130 and then along a radial groove 132 to a transverse passageway 134 extending through vane guides 136 and 136'. The flow of oil is clearly shown by the arrows 137 in Figure 7. The oil coats the surfaces of the vanes and passes along the surface to the walls of pistons 64 and 64', respectively. The oil coats these surfaces and provides a seal between the vane and the pistons as well as the pistons and the walls of cylinders 60 and 60', respectively, maintaining the appropriate vacuum levels in the cylinder on opposite sides of the vanes, all as previously described. Any excess oil passes through a passageway 138 in drive shaft 112 and through a port 140 to lubricate races 142 of roller bearing 144.

Thus, the pressurized lubrication system shown in the rolling piston pump P of Figure 7 provides a dual function. First, it lubricates the cylinder walls and piston walls, as required. Also, it forms a seal between the cylinder walls and piston walls to maintain a differential pressure required within the cylinders as required on opposite sides of the vanes.

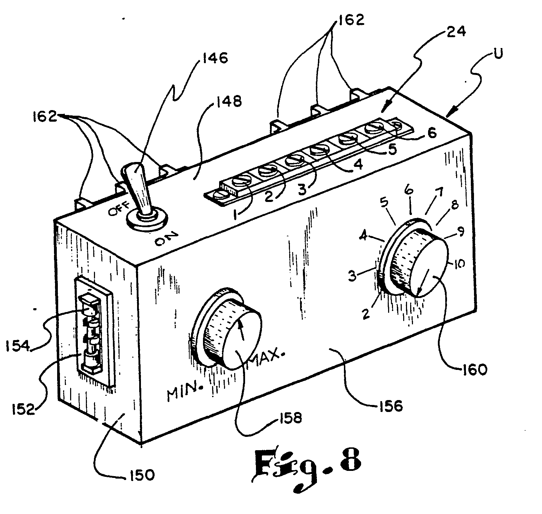

The external components of the electronic fuel control unit U are illustrated in Figure 8 whereas the circuitry therefor is shown best in Figure 9. The unit is turned on and off by a toggle switch 146 on top panel 148. Contact strip 24 is also located on top panel 148 and is connected electrically as previously described with respect to Figure 1. Mounted on the left end panel 150 is a fuse holder 152 in which a fuse, such as a ten ampere fuse 154, may be placed. On the front panel 156 at the left hand side is a potentiometer 158 which controls the duration of the fuel injection from a minimum of 0.3 milliseconds to a maximum of 10 milliseconds, all as will be more fully described below. On the right hand side of front panel 156 is a twelve position rotary switch 160 in which positions 2—10 represent the number of firings of the coil which will produce one fuel injection. Switch positions 1, 11 and 12 are not used. A heat sink 162 is provided on the back panel for dissipating the heat from the unit.

Now the details of the electronic fuel control unit will be described with particular reference to Figure 9. Typically, voltage released from the point side of coil 32 will have an amplitude of 50 volts peak-to-peak in the shape of a square wave with a ringing on the positive side of the pulse of about nine rings. The square wave enters the electronic fuel control unit by a contact point 3 of the six contact point terminal strip 24. From here the pulse travels through integrated circuit IC-1. This pulse in integrated circuit IC-1 first passes through resistors R-1 and R-2. This reduces the high voltage from the coil pulse to about 1/2 volt, an acceptable level for rectifier diode D-1. In addition, high frequency capacitor C-1 filters some of the high frequency ripple to ground. Resistor R-3 taps additional irregularities from the remaining voltage.

Integrated circuit IC-1 includes four NOR gates. The first two gates 164, 166 which comprise the core of the filtering network and the first half of integrated circuit IC-1, are used as a monostable multivibrator. The other two gates 168, 170 are the second half of integrated circuit IC-1 and are used as a monostable multivibrator with variable pulse width and serve as a pulse width selecting network.

The pulse from diode D-1 enters transistor Q-1 which acts as a saturated switch in that it is either "ON"

4

or "OFF". Thus, it either shorts the output voltage to ground or opens up and allows B+ from battery 26 to flow to the output and pin 1 of NOR gate 164. Thus, the ringing square wave has now been replaced by a filtered square wave to trigger NOR gate 164 at pin 1.

NOR gate 164 acts as a one shot, in that it produces one output pulse for one input pulse. The gate is designed as a NOR gate so any high input voltage on either pin 1 or pin 2 produces a low output voltage on pin 3. Only if both input voltages on pins 1 and 2 are low, will a high output voltage on pin 3 exist. Because the positive input pulse is high, having been held at 10 volts by B+, through the "OFF" action of transistor Q-1, the output at pin 3 is low. This bleeds off the pin 3 side of capacitor C-2 through pin 3 and resistor R-6.

When a positive pulse enters transistor Q-1, it causes this transistor to conduct, shorting pin 1 of NOR gate 164 to ground. With pin 1 low, pin 3 will be high, causing the left side of capacitor C-2 to be high and inducing a negative potential on the right side of capacitor C-2. This, in turn, causes a negative potential or low condition on pins 5 and 6 of NOR gate 166 thus producing a positive pulse on pin 4. B+ is fed into integrated circuit IC-1 by pin 4. A capacitor C-3 filters out random noises.

The positive output pulse from pin 4 then goes from the first half of integrated circuit IC-1 to integrated circuit IC-2 through pin 14. It also goes back over diode D-2 which keeps pin 3 of NOR gate 164 low by keeping pin 2 high. Integrated circuits IC-1 and IC-2 will function over a wide voltage range such as from 5 to 18 volts. This is significant since the automobile may be producing 14 volts or more with the alternator charging. Integrated circuit IC-1 has a high input impedance so that it does not load down the previous circuitry such as transistor Q-1.

Part of a safety feature which eliminates the chance of premature overlapping firings of pin 4, is the return of the pin 4 output over diode D-2 to pin 2 on NOR gate 164. The positive pulse from pin 4 locks pin 2 in a positive condition. As pin 2 goes positive, pin 3 goes negative and remains negative. It cannot be triggered by pin 1 until pin 2 bleeds off through resistor R-6. When it does, pin 2 drops to 0 volts and any pulse of pin 1 can reactivate NOR gate 164 again. Therefore, there is no response by the monostable multivibrator to any incoming voltage until capacitor C-4, which was also charged by the feedback through diode D-2, bleeds down to ground through resistor R-6. This effectively filters out any ringing. The control of the time element during which new incoming pulse is effective in actuating the monostable multivibrator depends on the values in capacitors C-2 and C-4 and in the resistors R-5 and R-6.

Integrated circuit IC-2, which is the frequency selecting network, includes a variable stepping switch which resets every time the selected number of steps have been completed as indicated by the setting of rotary switch 160. Integrated circuit IC-2 is powered by B+ through pin 16 and filtered by capacitor C-5. This eliminates the effect of extraneous noises. The first pulse from pin 4 of NOR gate 166 continues to pin 3 of integrated circuit IC-2 directly from pin 14, and from there to the second half of integrated circuit, IC-1. However, every pulse thereafter is used as a trigger in a stepping circuit. This means that between resets, only one pulse emanates from pin 3 of integrated circuit IC-2 for every 2, 3, 4, 5, 6, 7, 8, 9, or 10 pulses entering integrated circuit IC-2, depending on the setting of rotary switch 160. Preferably, the setting of switch 110 will be done at the time of installation and will be set according to the characteristics of the automobile in which it is to be used. Typically, a larger engine will require a higher setting since its demand for fuel is greater.

As an example, if the pointer on rotary switch 160 is set on 8, the first pulse from pin 4 of NOR gate 166 would go through integrated circuit IC-2 and exit on pin 3 to travel to the second part of integrated circuit IC-1. Every pulse thereafter will advance the stepping action one step until it reaches step number 8 then it will reset and repeat the cycle. This results in one firing of the injector for every eight firings of the coil. This particular setting has been found satisfactory for an eight cylinder automobile. To accomplish this, the pin connections have been made as shown in Figure 9.

The timed pulse is then led from the frequency selector network IC-2 to the second half of integrated circuit IC-1, the pulse width selecting network. This determines the length of time that the solenoid will be energized, thereby fixing the duration of each fuel injection cycle.

The output voltage from integrated circuit IC-2 is applied to pin 13 of NOR gate 168 and the second half of integrated circuit IC-1. As pin 13 becomes positive, pin 11 becomes negative. This causes the left side of capacitor C-6 to become negative. At the end of the pulse, when pin 13 becomes negative and pin 11 becomes positive, the right side of capacitor C-6 becomes negative. Since this signal is applied to pin 8 of NOR gate 170, this causes pin 10 to become positive. At the right side of capacitor C-6, B+ is supplied through resistor R-7 and control potentiometer 158 which includes a variable resistor R-8. The greater the effective resistance across R-8 due to the setting of potentiometer 158, the greater the duration of each injection. As shown in Figure 1, the potentiometer 158 can be controlled by a mechanical linkage 172 from the gas pedal 174. Also, a control arm 176 for the butterfly air-intake control in carburetor 80 can be controlled from gas pedal 174 through linkage 178.

Referring back to Figure 9, the pulse from pin 10 of NOR gate 170 passes through resistor R-9 to the base of transistor Q-2. This causes transistor Q-2 to turn on and to conduct between emitter and collector turning on transistor Q-3, which in turn conducts ground between the emitter and collector. This ground is transmitted to pin 4 of solenoid 44 whose other pin 5 is connected to a continuous 12 volt supply from automobile battery 26. This voltage is controlled by toggle switch 146 on the electronic fuel control unit U.

The 12 volt potential from the positive side of car battery 26 is supplied to contact pin 1 on terminal strip 24 on top panel 148 of the electronic fuel control unit U. From there, the connections permit the voltage to pass through fuse 154 and toggle switch 146. The voltage then passes to resistor R-10 and to a rectifying diode D-3. All of the other B+ contacts are in the internal circuitry. After leaving diode D-3, the voltage passes through a Zener diode D-4 to ground. This diode acts more or less as a voltage regulator draining any voltage in excess of 12 volts. This is necessary because the available voltage may go as high as 14 volts when the alternator is charging the car's battery. After passing through diode D-3, the voltage is also led into two capacitors, to ground taps, namely capacitor C-7 and capacitor C-8 which further stabilize the voltage. After passing switch 146, the B+ voltage also goes to connector pin 5 on terminal strip 24 and through external wire 22 to the fuel injector I.

From the foregoing, it should be clear that the internal wiring for the six contact point terminal strip 24 is connected so that contact point 1 connects to fuse 154. Contact point 2 connects to the emitter of transmitter Q-3 and to all other ground connections. Contact point 3 connects to resistor R-1 input. Contact point 4 connects to the collector of transistor Q-3. Contact point 5 connects to toggle switch 146, and contact point 6 is open, i.e., it is not used.

Parts listed are set forth below in Tables I, II, III, IV, V and VI for the parts of electronic fuel control unit U, described above.

Electronic fuel control unit
TABLE I
Parts list—Resistors

|      | Ohms | Watts | Tolerance | Type | Function |
|------|------|-------|-----------|------|----------|
| R-1  | 47k  | 0.5   | 5%        | Carbon film | Voltage divider |
| R-2  | 47k  | 0.5   | 5%        | Carbon film | Voltage divider |
| R-3  | 33k  | 0.5   | 5%        | Carbon film | Voltage divider |
| R-4  | 10k  | 0.5   | 5%        | Carbon film | Pull up resistor |
| R-5  | 1Meg | 0.5   | 5%        | Carbon film | Pull up resistor |
| R-6  | 1Meg | 0.5   | 5%        | Carbon film | Pull down resistor |
| R-7  | 39k  | 0.5   | 5%        | Carbon film | Limiting resistor |
| R-8  | 500k | 0.5   | 5%        | Carbon film | Potentiometer |
| R-9  | 1k   | 0.5   | 5%        | Carbon film | Isolation resistor |
| R-10 | 22   | 1.0   | 5%        | Carbon film | Voltage dropping resistor |

TABLE II
Parts list—Capacitors

|     | Value    | Voltage  | Tolerance    | Function |
|-----|----------|----------|--------------|----------|
| C-1 | 0.001uf  | 50 volts | 10%          | Filter |
| C-2 | 0.001uf  | 50 volts | 10%          | Time constant determinant |
| C-3 | 0.047uf  | 50 volts | 10%          | Filter |
| C-4 | 0.001uf  | 50 volts | 10%          | Time constant determinant |
| C-5 | 0.047uf  | 50 volts | 10%          | Filter |
| C-6 | 0.100uf  | 50 volts | 10%          | Time constant determinant |
| C-7 | 0.001uf  | 50 volts | 10%          | Filter |
| C-8 | 100uf    | 50 volts | +50%, −10%   | Electrolytic filter |

# EP 0 181 974 B1

Electronic fuel control unit (Cont.)
TABLE III
Parts list—Diodes

| Diode | Type | Function |
|---|---|---|
| D-1 | 1N914 | Rectifier |
| D-2 | 1N914 | Rectifier (only) |
| D-3 | 1N914 | Rectifier (only) |
| D-4 | 1N4742A, 12v., Zener | Voltage regulator |

TABLE IV
Parts list—Transistors

| Transistor | Type | Function |
|---|---|---|
| Q-1 | 2N3601 | Switch |
| Q-2 | 2SC1505 | Darlington switch |
| Q-3 | 2SD350 | Darlington switch |

TABLE V
Parts List—Integrated circuits

| Integrated circuit | Type | Function |
|---|---|---|
| IC-1 | CD4001 | Filter and width selector |
| IC-2 | CD4017 | Pulse frequency selector |

TABLE VI
Parts list—Miscellaneous

| Misc. | Type | Function |
|---|---|---|
| F-1, Fuse | 10 Ampere | Circuit protection |
| S-1, Switch | 12 position, rotary, make before break | Pulse selector switch |
| S-2, Switch | ON-OFF, toggle, 6 Amp. | Master switch |
| Heat sink | 8 vane | Cooling |
| Term. strip | 6 connector | Connect int/ext/wiring |
| Chassis | | Contains circuitry |

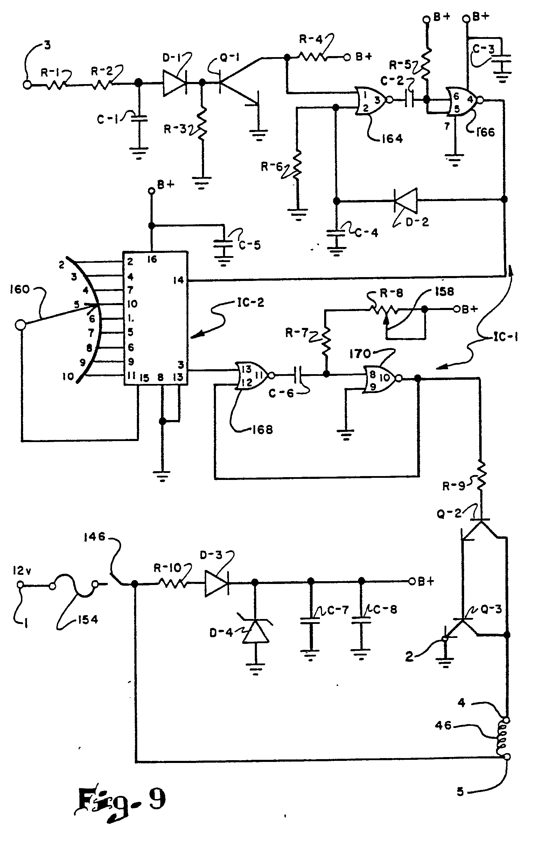

The embodiment of Figures 10 to 18 will now be described.

Liquid fuel is pumped from a fuel tank 10'' through a fuel line 12'' by a fuel pump 14''. The fuel pump may be a conventional electric fuel pump of the type used in the automotive industry. The pump supplies liquid fuel through a fuel line 16'' to a pair of fuel injectors 18''. Any excess fuel not required by the fuel injectors is returned to gas tank 10'' through an overflow line 10'' from fuel pump 14''. The fuel injectors 18'' are connected respectively to inlet ports 22'' of vacuum pump P.

Each fuel injector is energized by power supplied from electronic fuel control unit U through lines 24'' and 26'' connected to a terminal strip 28'' which has six contact points 1''—6''. Power is supplied to the electronic fuel control unit by means of a battery 30'' connected to contact points 1'' and 2'', respectively, on terminal strip 28'' through positive lead 32'' and negative lead 34'', as shown. The coil 36'' associated with the internal combustion engine is connected to contact point 3'' of terminal strip 28'' as by a line 38''. The signal from the coil is indicative of the speed of the engine and therefore provides a control for the frequency of energization of fuel injectors 18''. The injectors are connected to terminal strip 28'' through contact points 4'' and 5''. Contact point 6'' is not used.

The control circuitry for the electronic fuel control unit U is substantially identical to that described for the first embodiment with reference to Figures 8 and 9.

The fuel control unit U includes a twelve position rotary switch 40'' which can be adjusted to set the number of firings of the coil which will produce one fuel injection. A terminal 42'' on the fuel control unit U is connected to an airflow sensor, such as hotwire anemometer 44'', by means of a wire 46''. The anemometer 44'' is an integral part of an air-mass sensor 48''. The air-mass sensor is mounted on a throttle body assembly 50'' which includes air intake orifices 52'' mounted to supply air to intake manifold 54''. The arrangement of throttle body assembly 50'' with respect to the intake manifold 54'' is shown schematically in Figure 10 and it will be apparent to one skilled in the art how to supply appropriate fluid conduits for supplying the air from air intake 52'' to manifold 54''. The air is mixed with gaseous fuel provided through fuel line 56'' from vacuum pump P. The fuel-air mixture thus formed in manifold 54'' is supplied through an intake valve 58'' to cylinder 60'' in which piston 62'' reciprocates to burn the fuel upon ignition of spark plug 64'', as is well known in the art. Although only one cylinder has been shown, it will be understood that the engine may have multiple cylinders.

The amount of air supplied to the engine is controlled by means of butterfly valves 66'' mounted in intake orifices 52'' for pivotal movement in response to rotation of rod 68'' mounted on a control arm 70'' connected to gas pedal 72'' by means of a linkage 74''. Thus, as gas pedal 72'' is depressed to accelerate the car, butterfly valve 66'' will open to draw in more air. The amount of air being drawn into manifold 54'' is sensed by weight and a signal indicative of such weight is provided to fuel control unit U which in turn activates fuel injectors 18'' in response to such signal.

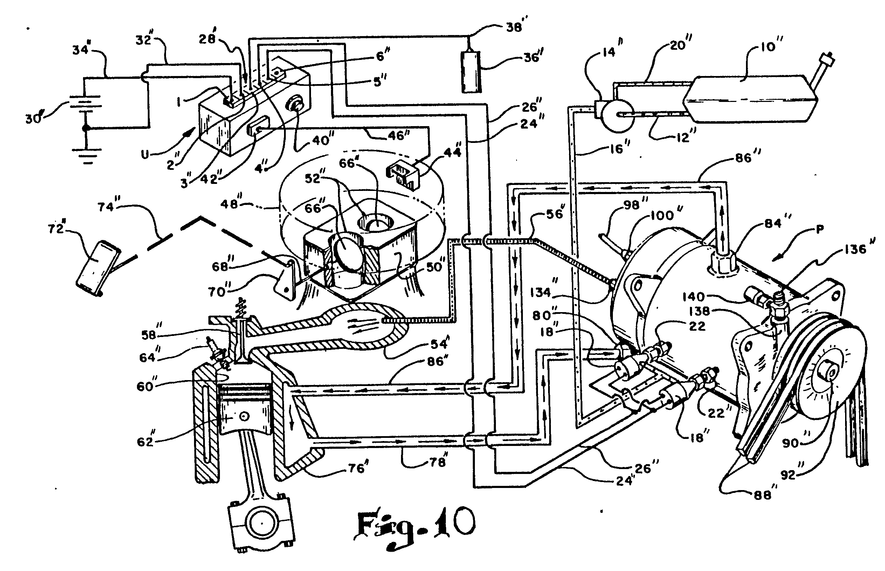

A heat exchange system is provided for maintaining the gaseous fuel at substantially constant temperature within the vacuum pump P whereby cooling fluid from the motor block 76'' is used as a heat transfer medium. The heated coolant is supplied by a supply tube 78'' to an inlet 80'' to the water jacket 82'' of the vacuum pump P, as best seen in Figures 11 and 12. After circulating through the water jacket, in a manner which is more fully described below, the coolant passes through an outlet 84'' and a return tube 86'' to motor block 76''.

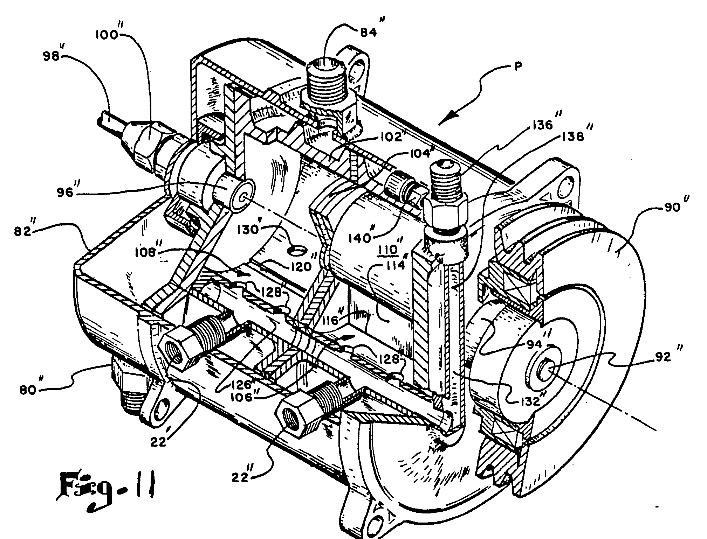

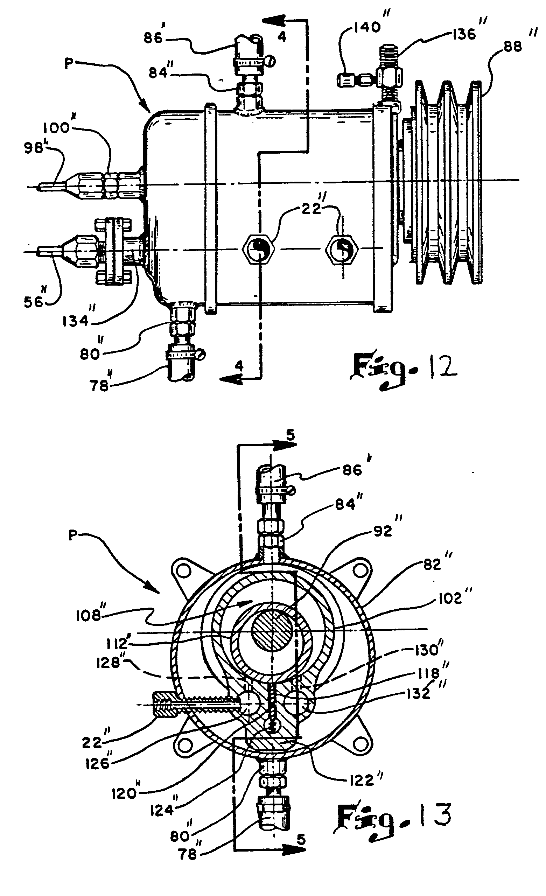

Looking now at the details of vacuum pump P, as best seen in Figures 11, 13 and 14, the pump is driven as by a pair of belts 88'' from the engine which extend around a double pulley 90'' attached to crank shaft 92''. Conveniently, crank shaft 92'' is supported in a pair of spaced bearings such as front bearing 94'' and rear bearing 96''. The bearings may be sealed bearings or may be lubricated as from an oil pressure line 98'' which is connected to a fitting 100'' at the rear end of crank shaft 92'' and supplies oil to the bearings and to the surfaces of the rolling pistons, all as more fully described in respect of the previous embodiment. Mounted within water jacket 82'' and spaced therefrom is cylinder 102'' which is divided by wall 104'' into a first or forward chamber 106'' and a second or rear chamber 108''. Conveniently, a first rolling piston 110'' is eccentrically mounted on crank shaft 92'' for rotation about the peripheral wall of chamber 106'', whereas the rear chamber 108'' is provided with a rolling piston 112'' also eccentrically mounted on crank shaft 92''. As will be apparent to one skilled in the art, these pistons are mounted 180° out of phase with each other so they are in opposite halves of their respective cycles to provide a smooth and continuously operating vacuum pump. A vane 114'' is mounted for reciprocal movement through a slot 116'', shown in Figure 11. Similarly, vane 118'' is mounted in slot 120'' in the bottom of chamber 108''. Conveniently, the slots 116'' and 120'' are located in cylinder base or support 122'', best seen in Figure 13. In each instance, the edge of the vane is urged against the wall of the respective pistons by a spring such as spring 124'' which bears against the bottom of vane 120''. This divides the chamber into a vacuum portion and a pressure portion, all as described more fully below. Fuel is sequentially injected by fuel injectors 18'' in accordance with the control settings of fuel control unit U. The atomized fuel is injected into a longitudinal passageway 126'' which is in fluid communication with chambers 106'' and 108'' through intake ports 128'', as shown in Figure 11. Compressed gaseous fuel will be discharged through discharge ports such as ports 130'' into a longitudinal passageway 132'', best seen in Figure 14 and through outlet port 134'' connected to fuel line 56'', which is connected to engine intake manifold 54'', as previously described.

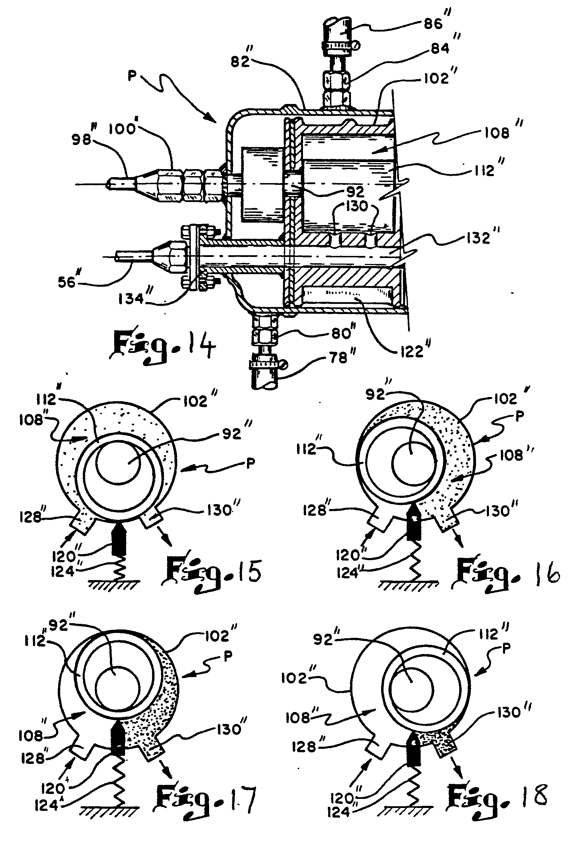

The operation of vacuum pump P can best be understood by reference to Figures 15 to 18, which diagrammatically show one cycle of a piston in one of the chambers, such as rear chamber 108''. The gaseous fuel is drawn into chamber 108'' through intake ports 128'' due to the vacuum or subatmospheric pressure created by the pump. The rolling piston 112'', together with vane 120'' which is urged against the surface of piston 112'' by spring 124'' divides cylinder 102'' into two chambers, namely a vacuum chamber into which atomized liquid fuel is drawn and converted to gaseous fuel and a compression chamber which compresses the gaseous fuel and discharges it through outlet ports 130''. It will be understood that even in the compression chamber, the pressure will be very low, even below atmospheric pressure. It is only important that it be above the engine manifold pressure to induce flow of the gaseous fuel from the compression chamber to the manifold. Thus, as the rolling piston 112'' rolls from the position shown in Figure 15 to the position shown in Figure 16 it will temporarily close port 128'' and begin compressing the gaseous fuel which is ahead of the piston. When the piston reaches the position of Figure 16, port 128'' will again be open and fuel will enter into the space between piston 112'' and vane 114''. As the piston 112'' continues to roll from the position shown in Figure 16 to the position shown in Figure 17, the gaseous fuel ahead of the piston will be compressed and additional fuel will be drawn into the pump by the vacuum created behind piston 112''. On the other hand, the fuel ahead of piston 112'' continues to be compressed and to flow through port 130'' as the piston rolls from the position shown in Figure 17 to that shown in Figure 18. The fuel pressure will increase because of the restriction of port 130'' and can vary from subatmospheric pressure to a pressure of about two atmospheres. The gaseous fuel then is drawn to the intake manifold 54'' of the engine through fuel line 56'' by the manifold vacuum.

Advantageously, as best seen in Figure 11, an optional air inlet 136'' provides air through passageway 138'' to the end of fuel passageway 126'' so that a mixture of air and fuel are drawn through ports 128'' into the respective chambers 106'' and 108''. The amount of air which is mixed with the fuel is minute compared to the amount of liquid fuel injected through inlet ports 22'' and is controlled, as by a needle valve 140'', at inlet 136''. This minute amount of air causes greater initial air flow when the engine is started and better fuel flow during operation in some circumstances. The amount of air, if admitted, is minimized so that it has very little effect on the vacuum in the vacuum pump. In this regard, the vacuum pump draws a very high vacuum, such as on the order of 73.3 to 85.3 kN/m² (55 to 64 cm of mercury) on alcohol fuel, and 85.3 to 92 kN/m² (64 to 69 cm of mercury) on gasoline fuel at sea level, so that the atomized fuel droplets are rapidly and completely converted from liquid to gas as they are injected through inlets 22''. The optimum vacuum to obtain substantially complete vaporization of the fuel has found to be 81.3 kN/m² (61 cm of mercury) for alcohol and 88 kN/m² (66 cm of mercury) for gasoline. These high vacuums can be drawn because the system is nearly a closed system, i.e., very little air is drawn into the vacuum chamber. This permits the use of a vacuum pump of practical size and power requirements not heretofor possible.

As will be apparent from looking at Figures 11, 13 and 14 the liquid coolant from the engine after entering inlet 80'' will pass all around the outside of cylinder 102'' and will be contained by the water jacket 82''. This will assure that the gaseous fuel is maintained at a relatively high temperature, both during conversion from liquid to gas in the vacuum chamber and as the gas is being compressed in the pressure chamber within each cylinder. This minimizes the possibility that any of the fuel will recondense so as not to be burned. Conveniently, the length of fuel line 56'' is relatively short so that little or no condensation will take place between the vacuum pump P and the engine manifold 54''. In fact, in an actual installation the vacuum pump may be located immediately adjacent the manifold so that the length of fuel line 56'' is very short. It has been found that the temperature of the gaseous fuel should be kept in the range of 71°C to 94°C with a temperature of about 82°C being desirable. Since this is the normal operating temperature range of most internal combustion engines, the use of the liquid coolant from the engine serves as a very practical heat exchange medium. Of course, heat could be provided from other sources, such as the exhaust system of the vehicle.

A closed fuel vaporization system has been provided for an internal combustion engine wherein liquid fuel droplets are injected into a vacuum chamber where they are immediately vaporized to form a gaseous fuel. No air is admitted into the system thereby minimizing the size of vacuum pump needed to draw a sufficient vacuum to vaporize all of the fuel. This fuel is maintained at a suitable temperature and introduced into the intake manifold of an internal combustion engine resulting in substantially greater fuel economy than was previusly thought possible. A heat exchange system is provided utilizing the heated cooling fluid of the internal combustion engine as a heat exchange medium which heats the vacuum chamber, vacuum pump and associated fuel lines to reduce the vapor point of the gaseous fuel to minimize recondensation. A pressurized lubrication system is provided which lubricates the bearings of the rolling pistons as well as the piston walls and serves as a vapor seal between the moving parts within the cylinder. An electronic fuel control unit is provided which varies the number of firings of the coil to produce one fuel injection and adjust the length of that injection in response to the demands of the engine.

Further, a device for converting liquid hydrocarbon fuel to a substantially gaseous fuel has been provided wherein fuel is injected directly into a vacuum pump. The vacuum pump has an optional air bleed valve for selectively introducing a minute, controlled amount of air to the vacuum chamber to enhance flow and vaporization of the fuel. The standard carburettor for an internal combustion engine is unnecessary since vaporized fuel can immediately be introduced directly into the manifold of the internal combustion engine to be ignited by the spark plugs and start the engine upon activation of the starter motor for the engine.

## Claims

1. A liquid fuel to gaseous fuel converting device for an internal combustion engine, the device comprising a vacuum chamber (C, 106'', 108''), a fuel reservoir (10, 10''), means (I, 18'') for supplying fuel substantially without air into said vacuum chamber (C, 106'', 108'') and having an inlet connected to said reservoir (10, 10''), and vacuum pump means (P) coupled to said vacuum chamber characterised in that said vacuum chamber (C, 106'', 108'') is heated, and in that said fuel supplying means is an injector (I), said vacuum pump means being capable of drawing a substantial vacuum on said chamber such that liquid fuel is substantially completely vaporized on injection, and in that the device comprises a fuel control unit (U) connected to said injector (I, 18''), said injector being responsive to signals from said fuel control unit (U) to adjust the frequency and volume of liquid fuel injected into said vacuum chamber (C, 106'', 108'').

2. A device as claimed in claim 1, characterised in that said vacuum chamber (C) has an outlet connected externally to an inlet of said vacuum pump means (P).

3. A device as claimed in claim 1, characterised in that said vacuum chamber (106″, 108″) is defined within said pump means (P).

4. A device as claimed in any one of the preceding claims, in an internal combustion engine, characterised in that it further comprises heating means (H) comprising conduits (92, 98) carrying hot fluid from the internal combustion engine into housing means surrounding said vacuum pump means (P).

5. A device as claimed in claim 4, characterised in that said hot fluid is liquid engine coolant.

6. A device as claimed in any one of the preceding claims, characterised in that the vacuum drawn in said vacuum chamber is in the range 73.3—85.3 kN/m² (55 to 64 cm of mercury at sea level).

7. A device as claimed in any one of the preceding claims, characterised in that the temperature of said gaseous fuel is kept in the range 71 to 94°C.

8. A device as claimed in any one of the preceding claims, characterised in that said injector (I, 18″) injects liquid fuel into said vacuum chamber (C, 106″, 108″) in the form of liquid droplets.

9. A device as claimed in any one of the preceding claims, characterised in that said vacuum pump means (P) comprises a rolling piston pump which comprises at least one cylinder (60, 60′, 102″), a crank shaft (61, 92″) mounted coaxially within said cylinder (60, 60′, 102″) for rotation, a piston (64, 64′, 110″, 112″) eccentrically mounted on said crank shaft (62, 92″) and rotatable so that the piston wall rotates about the peripheral surface of the cylinder when the crank shaft (62, 92″) is rotated, a vane (66, 66′, 114″, 118″) extending through said cylinder wall and being biased so that the edge thereof contacts the piston wall in a straight line contact to separate the cylinder (60, 60′, 102″) into two sections, bearings (124, 144, 94″, 96″) rotatably supporting said crank shaft (62, 92″) for rotation within said cylinder (60, 60′, 102″), a pressurized oil system (98″, 116, 120, 122, 126, 128, 132, 134) supplying oil to said bearings (124, 144, 94″, 96″) and said piston walls in serial flow, wherein the oil also provides a seal between the piston walls and the cylinder walls and between said vane (66, 66′, 114″, 118″) and said piston wall to provide substantially air tight chambers, a passageway (118) into a first bearing (124) at one end of said crank shaft (62), a passageway (128, 132) from said first bearing to said vanes (66, 68′) and a passageway (138) from said cylinder to the bearing (144) for the other end of said crank shaft (62).

10. A device as claimed in claim 3, characterised in that it further comprises an air bleed valve (136″) connected to said vacuum chamber (106″, 108″) adjacent said injector (I), said valve (136″) supplying a minute, controlled amount of air to said vacuum chamber.

11. A device as claimed in claim 10 or claim 3, characterised in that said vacuum chamber (106″, 108″) is a cylindrical chamber having substantially flat end walls and a cylindrical side wall with a longitudinal central axis, said injector (18″) comprises a liquid fuel inlet (126″, 128″) into said chamber, and said pump means (P) further comprising a gaseous fuel outlet (130″) from said chamber, a movable vane (114″, 118″) having a contacting edge, parallel to said axis, for movement toward and away from said axis, an eccentrically mounted rolling piston (110″, 112″) mounted for rotation about said axis and within said chamber (106″, 108″) and having a length substantially equal to the length of said chamber (106″, 108″) and a diameter wherein the peripheral surface of said piston (110″, 112″) makes continuous line contact with said cylindrical side wall as said piston (110″, 112″) rotates within said chamber (106″, 108″), said vane (114″, 118″) being biased so that it divides said chamber (106″, 108″) into a vacuum section in communication with said inlet (126″, 128″) and a pressure section in communication with said outlet (130″), said fuel control unit (U) controlling said fuel injector (18″) so that liquid fuel droplets are injected into said chamber (106″, 108″) only during a vacuum cycle of said pump means (P), and being capable of synchronising the injection of liquid fuel droplets into said chamber with said vacuum cycle.

12. A device as claimed in claim 11, characterised in that it further comprises means (98″) supplying a lubricant along the surface of said vane (114″, 118″) to the edge thereof, said lubricant providing a fluid seal between said vane edge and said piston surface and between said piston surface and said cylindrical wall along said line contact.

13. A device as claimed in claim 11 or 12, characterised in that said fuel control unit (U) comprises an air-mass sensor (48″) which continuously measures and controls the weight of air entering an associated engine to mix with the gaseous fuel supplied from the outlet (130″) of said pump means (P).

14. A method of changing liquid hydrocarbon fuel to a gaseous hydrocarbon fuel comprising the steps of injecting droplets of liquid fuel substantially without air into a chamber, drawing a vacuum in the chamber, and discharging the gaseous fuel, characterised in that the method further comprises heating the vacuum chamber, the frequency and duration of the injecting step being controlled such that, in the temperature and vacuum conditions, the injected liquid fuel is substantially completely vaporised on injection without distillation.

**Patentansprüche**

1. Vorrichtung zum Umwandeln von flüssigem Brennstoff in gasförmigen Brennstoff für eine Brennkraftmaschine, enthaltend eine Unterdruckkammer (C, 106″, 108″), einen Brennstofftank (10, 10″), eine Einrichtung (I, 18″) zum Zuführen von Brennstoff im wesentlichen ohne Luft in die Unterdruckkammer (C, 106″, 108″) und mit einem Einlaß, der mit dem Tank (10, 10″) verbunden ist, und einer

# EP 0 181 974 B1

Unterdruckpumpe (P), die mit der Unterdruckkammer verbunden ist, dadurch gekennzeichnet, daß die Unterdruckkammer (C, 106'', 108'') beheizt ist und daß die Brennstoffzuführeinrichtung ein Einspritzer (I) ist, die Unterdruckpumpe in der Lage ist, in der genannten Kammer einen wesentlichen Unterdruck zu erzeugen, so daß bei der Einspritzung von flüssigem Brennstoff dieser im wesentlichen vollständig verdampft wird, und daß die Vorrichtung weiterhin eine Brennstoffsteuereinheit (U) aufweist, die mit dem Einspritzer (I, 18'') verbunden ist, der Einspritzer auf Signale von der Brennstoffsteuereinheit (U) anspricht, um die Häufigkeit und das Volumen des in die Unterdruckkammer (C, 106'', 108'') eingespritzten Brennstoffs einzustellen.

2. Vorrichtung nach Anspruch 1, dadurch gekennzeichnet, daß die Unterdruckkammer (C) einen Auslaß aufweist, der extern mit einem Einlaß der Unterdruckpumpe (P) verbunden ist.

3. Vorrichtung nach Anspruch 1, dadurch gekennzeichnet, daß die Unterdruckkammer (106'', 108'') in der Pumpe (P) ausgebildet ist.

4. Vorrichtung nach einem der vorhergehenden Ansprüche in einer Brennkraftmaschine, dadurch gekennzeichnet, daß sie weiterhin eine Heizvorrichtung (H) aufweist, die Leitungen (92, 98) enthält, die heißes Fluid von der Brennkraftmaschine in ein Gehäuse leiten, das die Unterdruckpumpe (P) umgibt.

5. Vorrichtung nach Anspruch 4, dadurch gekennzeichnet, daß das heiße Fluid flüssiges Maschinenkühlmittel ist.

6. Vorrichtung nach einem der vorhergehenden Ansprüche dadurch gekennzeichnet, daß der in der Unterdruckkammer erzeugte Unterdruck im Bereich zwischen 73,3 und 85,3 kN/m$^2$ (55 bis 64 cm Quecksilbersäule auf Meereshöhe) liegt.

7. Vorrichtung nach einem der vorhergehenden Ansprüche, dadurch gekennzeichnet, daß die Temperatur des gasförmigen Brennstoffs im Bereich zwischen 71 und 94°C gehalten wird.

8. Vorrichtung nach einem der vorhergehenden Ansprüche, dadurch gekennzeichnet, daß der Einspritzer (I, 18'') flüssigen Brennstoff in die Unterdruckkammer (C, 106'', 108'') in Form von flüssigen Tröpfchen einspritzt.

9. Vorrichtung nach einem der vorhergehenden Ansprüche, dadurch gekennzeichnet, daß die Unterdruckpumpe (P) eine Exzenterpumpe (Rollkolbenpumpe) ist, die enthält: wenigstens einen Zylinder (60, 60', 102''), eine Kurbelwelle (61, 92''), die koaxial in dem Zylinder (60, 60', 102'') drehbar gelagert ist, einen Kolben (64, 64', 110'', 112''), der exzentrisch auf der Kurbelwelle (62, 92'') montiert ist und derart drehbar ist, daß die Kolbenwand um die Umfangsfläche des Zylinders rotiert, wenn die Kurbelwelle (62, 92'') gedreht wird, einen Flügel (66, 66', 114'', 118''), der sich durch die Zylinderwand erstreckt und derart vorgespannt ist, daß ihr Rand die Kolbenwand in einer geraden Berührungslinie berührt, um den Zylinder (60, 60', 102'') in zwei Sektionen zu unterteilen, Lager (124, 144, 94'', 96''), die drehbar die Kurbelwelle (62, 92'') zur Drehung in dem Zylinder (60, 60', 102'') lagern, ein Drucкölsystem (98'', 116, 120, 122, 126, 128, 132, 134), das Öl den Lagern (124, 144, 94'', 96'') und den Kolbenwänden in einer Reihenströmung zuführt, wobei dasa Öl auch eine Dichtung zwischen den Kolbenwänden und den Zylinderwänden und zwischen dem Flügel (66, 66', 114'', 118'') und der Kolbenwand herstellt, um im wesentlichen luftdichte Kammern zu bilden, einen Durchgang (118) in ein erstes Lager (124) am einen Ende der Kurbelwelle (62), einen Durchgang (128, 132) von dem ersten Lager zu den Flügeln (66, 68') und einen Durchgang (138) von dem Zylinder zu dem Lager (144) für das andere Ende der Kurbelwelle (62).

10. Vorrichtung nach Anspruch 3, dadurch gekennzeichnet, daß sie weiterhin ein Luftdurchlaßventil (136'') aufweist, das mit der Unterdruckkammer (106'', 108'') benachbart dem Einspritzer (I) angeordnet ist und das eine winzige, gesteuerte Luftmenge in die Unterdruckkammer einleitet.

11. Vorrichtung nach Anspruch 10 oder Anspruch 3, dadurch gekennzeichnet, daß die Unterdruckkammer (106'', 108'') eine zylindrische Kammer ist, die im wesentlichen flache Stirnwände und eine zylindrische Seitenwand mit einer längserstreckten Mittenachse aufweist, daß der Einspritzer (18'') einen Einlaß (126'', 128'') für flüssigen Brennstoff in die Kammer enthält und daß die Pumpe (P) weiterhin aufweist: einen Auslaß (130'') für gasförmigen Brennstoff aus der Kammer, einen beweglichen Flügel (114'', 118'') mit einer Berührungskante parallel zu der Achse zur Bewegung gegen die und weg von der Achse, einen exzentrisch gehaltenen Rollkolben (110'', 112''), der zur Drehung um die Achse und in der Kammer (106'', 108'') gelagert ist und eine Länge aufweist, die im wesentlichen gleich der Länge der Kammer (106'', 108'') ist und der einen solchen Durchmesser aufweist, daß die Umfangsfläche des Kolbens (110'', 112'') eine durchgehende Berührungslinie mit der zylindrischen Seitenwand bildet, wenn der Kolben (110'', 112'') innerhalb der Kammer (106'', 108'') rotiert, wobei der Flügel (114'', 118'') derart vorgespannt ist, daß er die Kammer (106'', 108'') in eine Unterdrucksektion, die mit dem Einlaß (126'', 128'') in Verbindung ist, und in eine Drucksektion, die mit dem Auslaß (130'') in Verbindung ist, teilt, wobei die Brennstoffsteuereinheit (U) den Kraftstoffeinspritzer (18'') derart steuert, daß flüssige Brennstofftröpfchen in die Kammer (106'', 108'') nur während eines Unterdruckzyklus der Pumpe (P) eingespritzt werden, und in der Lage ist, die Einspritzung der flüssigen Brennstofftröpfchen in die Kammer mit dem Unterdruckzyklus zu synchronisieren.

12. Vorrichtung nach Anspruch 11, dadurch gekennzeichnet, daß sie weiterhin eine Einrichtung (98'') enthält, die ein Schmiermittel längs der Oberfläche des Flügels (114'', 118'') zum Rand desselben zuführt, das eine Fluiddichtung zwischen dem Flügelrand und der Kolbenoberfläche und zwischen der Kolbenoberfläche und der zylindrischen Wand längs der Berührungslinie bildet.

13. Vorrichtung nach Anspruch 11 oder 12, dadurch gekennzeichnet, daß die Brennstoffsteuereinheit

11

(U) einen Luftmassensensor (48'') aufweist, der kontinuierlich das Gewicht der in eine zugeordnete Maschine eintretenden Luft mißt und steuert, damit sie sich mit dem vom Auslaß (130'') der Pumpe (P) zugeführten gasförmigen Brennstoff mischt.

14. Verfahren zum Überführen von flüssigem Kohlenwasserstoffbrennstoff in einen gasförmigem Kohlenwasserstoffbrennstoff, umfassend die folgenden Schritte: Einspritzen von Tröpfchen aus flüssigem Brennstoff im wesentlichen ohne Luft in einer Kammer, Erzeugen eines Unterdrucks in der Kammer, und Auslassen des gasförmigen Brennstoffs, dadurch gekennzeichnet, daß das Verfahren weiterhin umfaßt: Erwärmen der Unterdruckkammer und Steuern der Häufigkeit und der Dauer des Einspritzschrittes derart, daß bei den herrschenden Temperatur- und Unterdruckbedingungen beim Einspritzen der eingespritzte flüssige Brennstoff im wesentlichen vollständig ohne Destillation verdampft wird.

**Revendications**

1. Un dispositif pour convertir un combustible liquide en un combustible gazeux pour moteur à combustion interne, ledit dispositif comprenant une chambre à vide (C, 106'', 108''), un réservoir à combustible (10, 10''), un dispositif (I, 18'') pour alimenter en combustible substantiellement dans air ladite chambre à vide (C, 106'', 108'') et ayant un orifice d'entrée relié audit réservoir (10, 10'') et une pompe à vide (P) couplée à ladite chambre à vide, caractérisé en ce que ladite chambre à vide (C, 106'', 108'') est chauffée, et en ce que le dispositif d'alimentation de carburant est un injecteur (I), ladite pompe à vide étant capable d'établir un vide substantiel dans ladite chambre, de façon telle que le combustible liquide est substantiellement complètement vaporisé dès l'injection, et en ce que le dispositif comporte une unité de contrôle de combustible (U) reliée audit injecteur (I, 18''), ledit injecteur étant sensible aux signaux provenant de ladite unité de contrôle de combustible (U) pour ajuster la fréquence et le volume de combustible liquide injecté dans ladite chambre à vide (C, 106'', 108'').

2. Un dispositif selon la revendication 1, caractérisé en ce que ladite chambre à vide (C) a un orifice de sortie relié extérieurement à un orifice d'entrée de ladite pompe à vide (P).

3. Un dispositif selon la revendication 1, caractérisé en ce que ladite chambre à vide (106'', 108'') est définie à l'intérieur de ladite pompe (P).

4. Un dispositif selon l'une quelconque des revendications précédentes, dans un moteur à combustion interne, caractérisé en ce qu'il comportre en outre des dispositifs chauffants (H) comprenant des conduites (92, 98) transportant un fluide chaud depuis le moteur à combustion interne jusqu'au carter entourant ladite pompe à vide (P).

5. Un dispositif selon la revendication 4, caractérisé en ce que ledit fluide chaud est un liquide de refroidissement pour moteur.

6. Un dispositif selon l'une quelconque des revendications précédentes, caractérisé en ce que le vide établi dans ladite chambre à vide est compris dans l'intervalle de 73,3—85,3 kN/m$^2$ (55 à 64 cm de mercure au niveau de la mer).

7. Un dispositif selon l'une quelconque des revendications précédentes, caractérisé en ce que la température dudit combustible gazeux est maintenue dans l'intervalle de 71 à 94°C.

8. Un dispositif selon l'une quelconque des revendications précédentes, caractérisé en ce que ledit injecteur (I, 18'') injecte le combustible liquide dans ladite chambre à vide (C, 106'', 108'') sous la forme de gouttelettes de liquide.

9. Un dispositif selon l'une quelconque des revendications précédentes, caractérisé en ce que ladite pompe à vide (P) comprend une pompe à piston roulant qui comporte au moins un cylindre (60, 60', 102''), un arbre à manivelle (61, 92'') monté à rotation coaxialement avec ledit cylindre (60, 60', 102''), un piston (64, 64', 110'', 112'') monté excentriquement sur ledit arbre à manivelle (62, 92'') et tournant de façon que la paroi du piston tourne autour de la surface périphérique du cylindre lorsque l'arbre à manivelle (62, 92'') est entraîné en rotation, une palette (66, 66', 114'', 118'') s'étendant à travers ladite paroi du cylindre et étant en biais de façon que son bord soit en contact avec la paroi du piston selon un contact en ligne droite pour séparer le cylindre (60, 60', 102'') en deux sections, des paliers (124, 144, 94'', 96'') supportant en rotation ledit arbre à manivelle (62, 92'') pour sa rotation à l'intérieur dudit cylindre (60, 60', 102''), un système à huile pressurisé (98'', 116, 120, 122, 126, 128, 132, 134) alimentant en huile lesdits paliers (124, 144, 94'', 96'') et lesdites parois du piston en écoulement en série, l'huile fournissant également un joint entre les parois du piston et les parois du cylindre, et entre ladite palette (66, 66', 114'', 118'') et ladite paroi du piston pour fournir des chambres substantiellement étanches à l'air, un passage (118) dans un premier palier (124) à une extrémité dudit arbre à manivelle (62), un passage (128, 132) dudit premier palier auxdites palettes (66, 68') et un passage (138) dudit cylindre au palier (144) pour l'autre extrémité dudit arbre à manivelle (62).

10. Un dispositif selon la revendication 3, caractérisé en ce qu'il comporte en outre une soupape de purge d'air (136'') reliée à ladite chambre à vide (106'', 108'') adjacente audit injecteur (I), ladite soupape alimentant une quantité minime contrôlée d'air dans ladite chambre à vide.

11. Un dispositif selon la revendication 10 ou 3, caractérisé en ce que ladite chambre à vide (106'', 108'') est une chambre cylindrique ayant des parois terminales substantiellement planes et une paroi latérale cylindrique avec un axe central longitudinal, ledit injecteur (18'') comprend un orifice d'entrée de combustible liquide (126'', 128'') dans ladite chambre, et ladite pompe (P) comprenant en outre un orifice de sortie de combustible gazeux (130'') de ladite chambre, une palette mobile (114'', 118'') ayant un bord de contact, parallèle audit axe, pour se mouvoir vers cet axe et en s'éloignant de cet axe, un piston roulant (110'', 112'') monté excentriquement pour tourner autour dudit axe et à l'intérieur de ladite chambre (106'', 108'') et ayant une longueur substantiellement égale à celle de ladite chambre (106'', 108'') et un diamètre tel que la surface périphérique dudit piston (110'', 112'') est en contact selon une ligne continue avec ladite paroi latérale cylindrique pendant que ledit piston (110'', 112'') tourne à l'intérieur de ladite chambre (106'', 108''), ladite palette (114'', 118'') étant en biais, de sorte qu'elle divise ladite chambre (106'', 108'') en une section sous vide en communication avec ledit orifice d'entrée (126'', 128'') et une section sous pression en communication avec cet orifice de sortie (130''), ladite unité de contrôle de combustible (U) contrôlant ledit injecteur de combustible (18'') de façon que les gouttelettes de combustible liquide soient injectées dans ladite chambre (106'', 108'') seulement durant un cycle de vide de ladite pompe (P), et étant capable de synchroniser l'injection des gouttelettes de combustibles liquide dans ladite chambre avec ledit cycle de vide.

12. Un dispositif selon la revendication 11, caractérisé en ce qu'il comprend en outre un dispositif (98'') alimentant un lubrifiant le long de la surface de ladite palette (114'', 118'') au bord de celle-ci, ce lubrifiant formant un joint fluide entre ledit bord de la palette et ladite surface du piston et entre ladite surface du piston et ladite paroi cylindrique le long de ladite ligne de contact.

13. Un dispositif selon la revendication 11 ou 13, caractérisé en ce que ladite unité de contrôle de combustible (U) comprend un détecteur de masse d'air (48'') qui mesure et contrôle en continu le poids de l'air entrant dans un moteur associé pour se mélanger avec le combustible gazeux alimenté par l'orifice de sortie (130'') de ladite pompe (P).

14. Un procédé pour changer un combustible hydrocarboné liquide en un combustible hydrocarboné gazeux comprenant les étapes d'injection de gouttelettes d'un combustible liquide substantiellement sans air dans une chambre, de mise sous vide de la chambre, et de décharge du combustible gazeux, caractérisé en ce que le procédé comprend en outre le chauffage de la chambre à vide, la fréquence et la durée de l'étape d'injection étant contrôlées de façon telle que, dans les conditions de température et de vide, le combustible liquide injecté est substantiellement complètement vaporisé dès l'injection sans distillation.

Fig-1

Fig-2

Fig-3

Fig-4

Fig-5

Fig-6

Fig. 7

Fig. 8

Fig. 9

Fig-10

Fig-11

Fig. 12

Fig. 13

Fig. 14

Fig. 15

Fig. 16

Fig. 17

Fig. 18